(19) Europäisches Patentamt
European Patent Office
Office européen des brevets

(11) EP 4 378 683 A1

(12) EUROPEAN PATENT APPLICATION
published in accordance with Art. 153(4) EPC

(43) Date of publication:
05.06.2024 Bulletin 2024/23

(51) International Patent Classification (IPC):
*B32B 27/00* (2006.01)    *B29C 59/02* (2006.01)

(21) Application number: 21951951.9

(52) Cooperative Patent Classification (CPC):
B29C 59/02; B32B 27/00

(22) Date of filing: 30.09.2021

(86) International application number:
PCT/JP2021/036153

(87) International publication number:
WO 2023/007757 (02.02.2023 Gazette 2023/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.07.2021  JP 2021123746
28.07.2021  JP 2021123747

(71) Applicant: Dai Nippon Printing Co., Ltd.
Tokyo 162-8001 (JP)

(72) Inventors:
• ISEMORI, Yuichi
Tokyo 162-8001 (JP)
• OONO, Takaya
Tokyo 162-8001 (JP)
• MOMEN, Kazuki
Tokyo 162-8001 (JP)

(74) Representative: Müller-Boré & Partner
Patentanwälte PartG mbB
Friedenheimer Brücke 21
80639 München (DE)

(54) **DECORATIVE SHEET AND DECORATIVE PLATE**

(57) The present invention provides a decorative sheet having excellent design properties where a picture pattern of a picture layer stably harmonizes with depressions and excellent scratch resistance. Provided is a decorative sheet including: a substrate sheet; a picture layer; a transparent resin layer; and a surface protective layer, the decorative sheet including at least the picture layer, the transparent resin layer, and the surface protective layer in a stated order on one side of the substrate sheet, the picture layer having a wood-grain pattern including a characteristic portion and a non-characteristic portion, the transparent resin layer having a depression ($D_1$) harmonizing with the characteristic portion of the picture layer on a side opposite to a side facing the picture layer, the substrate sheet containing a non-halogen thermoplastic resin and showing softer behavior in a high-temperature environment than in an ambient-temperature environment.

FIG. 3

EP 4 378 683 A1

**Description**

TECHNICAL FIELD

The present invention relates to decorative sheets and decorative panels including the decorative sheets.

BACKGROUND ART

Decorative panels including designed decorative sheets attached thereto are commonly used for decorating components used in building materials, furniture, home electrical appliances, or the like.

To impart visual design properties to a decorative panel, embossing or like treatment may be performed on a decorative sheet to form a pattern of protrusions and depressions, thereby imparting a 3D visual effect.

Patent Literature 1, for example, discloses a decorative sheet including, on one side of a substrate sheet, a picture printed layer on which a picture is printed, a transparent thermoplastic resin layer having a pattern of protrusions and depressions harmonizing with the picture, a surface protective layer protecting a surface of the transparent thermoplastic resin layer, and a gloss adjustment layer having a pattern in a gloss state harmonizing with the picture in the stated order, and a production method of the decorative sheet.

In the decorative sheet of Patent Literature 1, a pattern of protrusions and depressions is formed on the side facing the surface protective layer of the transparent thermoplastic resin layer. This harmonizes the picture of the picture printed layer with the pattern of protrusions and depressions of the transparent thermoplastic resin layer to improve texture and a 3D effect, enhancing reality of the picture.

The substrate sheet in the decorative sheet of Patent Literature 1 is a sheet-shaped layer including a resin film. Accordingly, there may be minor performance variations in different lots of the substrate sheet. This, together with changes in the work environment (temperature, etc.) during the production, may make it difficult to harmonize the picture of the picture printed layer provided on one side of the substrate sheet and the pattern of protrusions and depressions of the transparent thermoplastic resin layer, which results in a harmonization discrepancy. In other words, the harmonized design may lack stability.

In consideration of a recent demand for significantly excellent design properties where no discrepancy is found in the harmonization of a picture pattern of a picture layer with a pattern of protrusions and depressions formed on a decorative sheet, the decorative sheet of Patent Literature 1 is still insufficient and has room for improvement.

Decorative sheets are also desired to have sufficient scratch resistance because they are used for fittings (doors, etc.) or flooring materials.

CITATION LIST

- Patent Literature

Patent Literature 1: JP 2016-221871 A

SUMMARY OF INVENTION

- Technical Problem

The present invention aims to solve the above problem, and provide a decorative sheet having excellent design properties where a picture pattern of a picture layer stably harmonizes with depressions and excellent scratch resistance.

- Solution to problem

The present inventors made intensive studies to solve the above problem, and found out the following. A decorative sheet including, on one side of a substrate sheet, at least a picture layer, a transparent resin layer, and a surface protective layer in the stated order can suitably have a structure in which a characteristic portion of the picture layer stably harmonizes with depressions formed on the transparent resin layer, provided that the picture layer has a wood-grain pattern and the substrate sheet shows softer behavior in a high-temperature environment than in an ambient temperature environment. Thus, the present invention was completed.

Namely, the present invention relates to a decorative sheet including: a substrate sheet; a picture layer; a transparent resin layer; and a surface protective layer, the decorative sheet including at least the picture layer, the transparent resin layer, and the surface protective layer in a stated order on one side of the substrate sheet, the picture layer having a wood-grain pattern including a characteristic portion and a non-characteristic portion, the transparent resin layer having a depression ($D_1$) harmonizing with the characteristic portion of the picture layer on a side opposite to a side facing the picture layer, the substrate sheet containing a non-halogen thermoplastic resin and showing softer behavior in a high-temperature environment than in an ambient-temperature environment.

In the decorative sheet of the present invention, the substrate sheet preferably has a modulus of elasticity in a machine direction of 350 MPa or higher and 600 MPa or lower in an environment of 40°C.

The decorative sheet preferably has an elongation rate in a machine direction of 6% or higher and 10% or lower at a loading rate of 50 mN/min in an environment of 120°C, relative to a length in an environment of 20°C, in thermomechanical analysis.

Preferably, a modulus of elasticity ($E_{MD}$) in a machine direction and a modulus of elasticity ($E_{CD}$) in a cross direction of the decorative sheet are both 750 MPa or higher and 1100 MPa or lower in an environment of 20°C, and the modulus of elasticity ($E_{MD}$) in the machine direction and the modulus of elasticity ($E_{CD}$) in the cross direction give a ratio ($E_{MD}/E_{CD}$) of 1.00 or higher and 1.20 or lower.

Preferably, the characteristic portion of the picture layer includes at least one pattern selected from the group consisting of a vessel, a knot, an annual ring, and a mottle of a wood grain, and the picture layer has a color difference $\Delta E$ between the characteristic portion and the non-characteristic portion of 1.3 or more.

The substrate sheet is preferably a colored polyolefin film having a thickness of 50 um or greater and 70 um or smaller.

Preferably, the transparent resin layer has a thickness of 75 um or greater and 110 um or smaller, and the surface protective layer has a thickness of 12 um or greater and 35 um or smaller.

The present invention also relates to a decorative panel including: an adherend; and the decorative sheet on the adherend.

- Advantageous Effects of Invention

The present invention can provide a decorative sheet having significantly excellent design properties where a picture pattern of a picture layer stably harmonizes with depressions and excellent scratch resistance.

BRIEF DESCRIPTION OF DRAWINGS

FIGs. 1(a) and 1(b) each illustrate a cross-sectional view schematically showing an example of the decorative sheet of the present invention.

FIGs. 2(a) to 2(c) each illustrate a cross-sectional view schematically showing an example of the decorative sheet of the present invention.

FIG. 3(a) illustrates a perspective view schematically showing an example of the decorative sheet of the present invention, FIG. 3(b) illustrates a top view schematically showing an example of the decorative sheet of the present invention, and FIG. 3(c) illustrates a cross-sectional view schematically showing an example of the decorative sheet of the present invention.

FIG. 4 illustrates a cross-sectional view schematically showing a preferred example of the decorative sheet of the present invention.

DESCRIPTION OF EMBODIMENTS

<Decorative sheet>

The decorative sheet of the present invention is described below.

The numerical range indicated by "-" herein means "the lower limit or larger and the upper limit or smaller" (e.g., the range "α-β" refers to the range "α or larger and β or smaller").

The decorative sheet of the present invention includes, on one side of a substrate sheet, at least a picture layer, a transparent resin layer, a transparent resin layer, and a surface protective layer in the stated order.

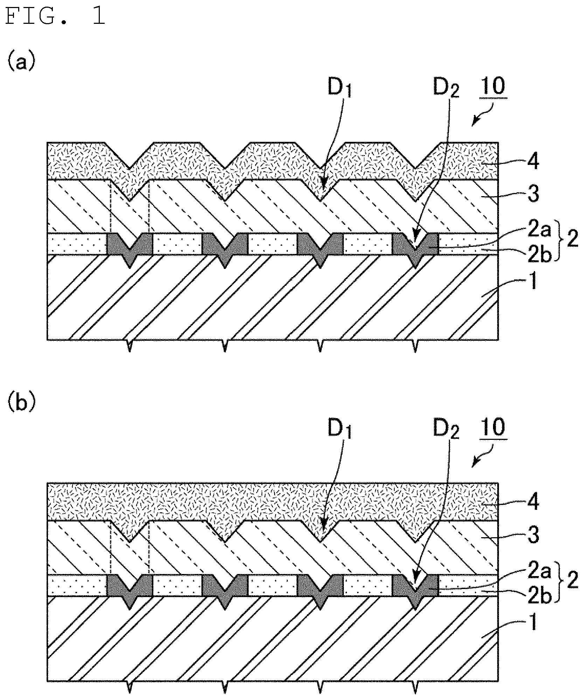

FIG. 1 illustrates a cross-sectional view schematically showing an example of the decorative sheet.

In the example of the decorative sheet of the present invention illustrated in FIG. 1, a decorative sheet 10 includes, on one side of a substrate sheet 1, at least a picture layer 2, a transparent resin layer 3, and a surface protective layer 4 in the stated order, and the picture layer 2 includes characteristic portions 2a and non-characteristic portions 2b.

The transparent resin layer 3 has depressions ($D_1$) harmonizing with the characteristic portions of the picture layer 2 on a side opposite to a side facing the picture layer 2. In the decorative sheet 10 of the present invention illustrated in FIG. 1, the picture layer 2 has depressions ($D_2$) positioned in the lamination direction of the depressions ($D_1$) on a

side opposite to a side facing the substrate sheet 1.

Preferably, the modulus of elasticity ($E_{MD}$) in the machine direction and the modulus of elasticity ($E_{CD}$) in the cross direction of the decorative sheet 10 of the present invention are both 750 MPa or higher and 1100 MPa or lower in an environment of 20°C. When the moduli of elasticity are lower than 750 MPa, a discrepancy may occur in the harmonization between the picture pattern of the picture layer 2 and the depressions ($D_1$) in the decorative sheet 10 of the present invention to impair the visual 3D effect, resulting in poor design properties. When the moduli of elasticity are higher than 1100 MPa, the decorative sheet 10 of the present invention may be too rigid, which may cause easy cracking of the decorative sheet 10 when used as a flooring material. The lower limit of each of the modulus of elasticity ($E_{MD}$) in the machine direction and the modulus of elasticity ($E_{CD}$) in the cross direction is more preferably 770 MPa and the upper limit thereof is more preferably 1050 MPa. The lower limit is still more preferably 790 MPa and the upper limit is still more preferably 1000 MPa.

For the modulus of elasticity ($E_{MD}$) in the machine direction herein, the machine direction is a direction parallel to the flow of the wood-grain pattern of the picture layer in the decorative sheet 10 of the present invention. For the modulus of elasticity ($E_{CD}$) in the cross direction herein, the cross direction is a direction perpendicular to the direction of the flow of the wood-grain pattern. These directions can be easily determined based on the wood-grain pattern appearing on the decorative sheet 10 of the present invention.

The modulus of elasticity ($E_{MD}$) in the machine direction and the modulus of elasticity ($E_{CD}$) in the cross direction can be determined as follows, for example. Dumbbell-shaped test pieces in conformity with JIS K6732 are punched out from the decorative sheet respectively for determination of the modulus of elasticity ($E_{MD}$) in the machine direction and determination of the modulus of elasticity ($E_{CD}$) in the cross direction. The test pieces are subjected to the measurement under the conditions of a tensile speed of 50 mm/min and the distance between chucks of 80 mm at a temperature of 20°C using a tensile compression tester. Based on the first straight line part of the resulting tensile stress-strain curve, the moduli of elasticity were calculated using the following formula.

$$E \ = \ \Delta\rho / \Delta\varepsilon$$

E: modulus of elasticity
$\Delta\rho$: stress difference due to the original average cross-sectional area between two points on the straight line
$\Delta\varepsilon$: strain difference between the same two points

Preferably, the moduli of elasticity in the machine direction and in the cross direction of the decorative sheet 10 of the present invention give a ratio ($E_{MD}/E_{CD}$) of 1.00 or higher and 1.20 or lower. With the ratio within the above range, a discrepancy is less likely to occur between the picture layer and the shapes of the depressions ($D_1$) in the horizontal direction when the decorative sheet 10 of the present invention is elongated or contracted in the machine direction to match the picture layer with the shapes of the depressions ($D_1$). Thus, high design properties are maintained. The upper limit of the ratio is more preferably 1.19, still more preferably 1.18.

The modulus of elasticity ($E_{MD}$) in the machine direction, the modulus of elasticity ($E_{CD}$) in the cross direction, and the ratio of these can be adjusted within the above ranges by appropriately adjusting the conditions (e.g., compounding ratio of raw materials, curing conditions, conditions for aging treatment) in the production of the surface protective layer.

Next, a description is given on each layer constituting the decorative sheet 10.

<Substrate sheet>

The decorative sheet 10 of the present invention includes the substrate sheet 1.

The substrate sheet 1 consists of a non-halogen thermoplastic resin and shows softer behavior in a high-temperature environment than in an ambient-temperature environment.

The expression "shows softer behavior in a high-temperature environment than in an ambient-temperature environment" means that regarding the elongation/contraction behavior in the temperature range of not lower than the glass transition temperature but not higher than the melting point, the sheet shows a decrease in modulus of elasticity of the sheet in the temperature range slightly higher than the ambient-temperature environment which is an assumed temperature range during drying in printing.

The substrate sheet 1 preferably has a modulus of elasticity ($E_{MD}$) in the machine direction of 350 MPa or higher and 600 MPa or lower in an environment of 40°C. When the modulus of elasticity ($E_{MD}$) is lower than 350 MPa, a discrepancy may occur in the harmonization between the picture pattern of the picture layer 2 and the depressions ($D_1$) in the decorative sheet 10 of the present invention to impair the visual 3D effect, resulting in poor design properties. When the modulus of elasticity ($E_{MD}$) is higher than 600 MPa, the decorative sheet 10 of the present invention may be too rigid, which may cause easy cracking of the decorative sheet 10 when used as a flooring material. The lower limit of the modulus of elasticity ($E_{MD}$) in the machine direction in an environment of 40°C is more preferably 380 MPa and the upper limit thereof is more preferably 540 MPa.

Examples of the non-halogen thermoplastic resin include: olefin-based thermoplastic resins such as low-density polyethylene (including linear low-density polyethylene), medium-density polyethylene, high-density polyethylene, ethylene-$\alpha$ olefin copolymers, homopolypropylene, polymethylpentene, polybutene, ethylenepropylene copolymers, propylene-butene copolymers, ethylene-vinyl acetate copolymers, saponified ethylene-vinyl acetate copolymers, and mixtures of these; thermoplastic ester-based resins such as polyethylene terephthalate, polybutylene terephthalate, polyethylene naphthalate, polyethylene naphthalate-isophthalate copolymers, polycarbonate, and polyarylate; acrylic thermoplastic resins such as polymethyl methacrylate, polyethyl methacrylate, polyethyl acrylate, and polybutyl actylate; polyamide-based thermoplastic resins such as Nylon 6 and Nylon 66; polyimides; polyurethanes; polystyrene; and acrylonitrile-butadiene-styrene resins.

Each of these non-halogen thermoplastic resins may be used alone or in combination of two or more.

Among these, preferred are olefin-based thermoplastic resins because they are excellent in printability of the picture layer 2 and inexpensive.

The substrate sheet 1 may be colored. In this case, a colorant (a pigment or a dye) may be added to the non-halogen thermoplastic resin for coloring.

Examples of a usable colorant include inorganic pigments such as titanium dioxide, carbon black, and iron oxide and organic pigments such as phthalocyanine blue, as well as various dyes.

One or more colorants may be selected from known or commercially available ones. The amount of the colorant added may be appropriately determined in accordance with desired coloration.

The substrate sheet 1 may contain various additives such as fillers, matting agents, blowing agents, flame retardants, lubricants, antistatic agents, antioxidants, ultraviolet absorbers, or light stabilizers, if needed.

The substrate sheet 1 may have any thickness. The thickness is preferably 40 um or greater and 200 um or smaller.

The substrate sheet 1 may consist of a single layer or include multiple layers.

The substrate sheet 1 in the decorative sheet 10 of the present invention includes preferably a colored polyolefin film having a thickness of 50 um or greater and 70 um or smaller. The decorative sheet 10 with the substrate sheet 1 including a colored polyolefin film having such a thickness is more likely to satisfy the requirement of the modulus of elasticity described later in terms of a combination of the thickness ranges of the transparent resin layer 3 and the surface protective layer 4 described later.

The substrate sheet 1 including a colored polyolefin film having a thickness of 50 um or greater and 70 um or smaller preferably has a modulus of elasticity in the machine direction in an environment of 40°C of 350 MPa or higher and 600 MPa or lower, more preferably 380 MPa or higher and 580 MPa or lower, still more preferably 400 MPa or higher and 570 MPa or lower.

In the decorative sheet 10 with the substrate sheet 1 including a colored polyolefin film having a thickness of 50 um or greater and 70 um or smaller with such a modulus of elasticity in the machine direction, the elongation and contraction of the substrate sheet 1 is stabilized when softening and thermal pressure embossing of the substrate sheet 1 and the transparent resin layer 3 are performed by heating with a non-contact infrared heater after the combination of the thickness ranges of the transparent resin layer 3 and the surface protective layer 4 is determined upon formation of the depressions ($D_1$). Thus, the harmonization between the picture pattern of the picture layer 2 and the depressions ($D_1$) are likely to be ensured.

The machine direction of the substrate sheet 1 means a direction parallel to the vessel of the wood-grain pattern described above. The modulus of elasticity in the machine direction of the substrate sheet 1 can be controlled within the above range, for example, by adjustment of the resin molecular weight or adjustment of the degree of crystallinity by annealing. The modulus of elasticity in the machine direction of the substrate sheet 1 in an environment of 40°C can be measured by the method for measuring the modulus of elasticity ($E_{MD}$) in the machine direction of the decorative sheet 10 described above in which a dumbbell-shaped test piece is prepared using the substrate sheet 1 and the temperature condition is set to 40°C.

The substrate sheet 1 preferably has an elongation rate in the machine direction of 6% or higher and 10% or lower at a loading rate of 50 mN/min in an environment of 120°C, relative to the length in an environment of 20°C, in thermomechanical analysis (using a thermomechanical analyzer (TMA)). The elongation rate is more preferably 6.1% or higher and 9.7% or lower, still more preferably 6.2% or higher and 9.4% or lower.

The thermomechanical properties of the substrate sheet 1 can be controlled within the above range, for example, by adjustment of the resin molecular weight or adjustment of the degree of crystallinity by annealing.

The substrate sheet 1 is preferably a colored polyolefin film having a thickness of 50 um or greater and 70 um or smaller. The elongation and contraction of the substrate sheet 1 is stabilized when softening and thermal pressure embossing of the substrate sheet and the transparent resin layer are performed by heating with a non-contact infrared heater after the combination of the thickness ranges of the transparent resin layer 3 and the surface protective layer 4 is determined. Thus, the harmonization between the picture pattern of the picture layer and the depressions are likely to be ensured.

(Picture layer)

The decorative sheet 10 includes the picture layer 2.

The picture layer 2 is a layer for imparting decorativeness to the decorative sheet 10.

The picture layer 2 may be, for example, a design layer formed by printing various patterns using ink and a printer, or a layer combining a hiding layer and a design layer.

The hiding layer can add an intended color to the substrate sheet 1 which may be stained or colored unevenly, thereby adjusting the color of the surface.

Providing a design layer can suitably provide the picture layer 2 having a wood-grain pattern.

These picture patterns are formed by typical polychromic printing in process colors including yellow, red, blue, and black, or polychromic printing in spot colors in which individual colors constituting the pattern are used.

The ink composition used for the picture layer 2 is a composition prepared by appropriately mixing a binder resin with a colorant such as a pigment and a dye, an extender pigment, a solvent, a stabilizer, a plasticizer, a catalyst, a curing agent, and the like.

Any binder resin may be used. Preferred examples thereof include urethane resins, acrylic resins, urethane-acrylic resins, urethane-acrylic copolymer resins, vinyl chloride/vinyl acetate copolymer resins, vinyl chloride/vinyl acetate/acrylic copolymer resins, acrylic resins, polyester resins, and nitrocellulose resins. Any of these binder resins may be used alone or in combination of two or more.

Preferred examples of the colorant include: inorganic pigments such as carbon black (Chinese ink), iron black, titanium white, antimony white, chrome yellow, titanium yellow, red iron oxide, cadmium red, ultramarine, and cobalt blue; organic pigments or dyes such as quinacridone red, iso-indolinone yellow, and phthalocyanine blue; metal pigments formed of foil flakes of aluminum, brass, and the like; and pearl-like luster pigments (pearl pigments) formed of foil flakes of titanium dioxide-coated mica, basic lead carbonate, and the like.

Each of these may be used alone or in combination of two or more.

The picture layer 2 has a wood-grain pattern including the characteristic portions 2a and the non-characteristic portions 2b.

The characteristic portions 2a refer to portions having a characteristic enabling recognition of a picture pattern of the picture layer 2. For example, a vessel, a knot, an annual ring, and a mottle of the wood grain correspond to the characteristic portions 2a.

The non-characteristic portions 2b refer to portions other than the characteristic portions 2a.

The picture layer 2 preferably has a color difference $\Delta E$ between the characteristic portions 2a and the non-characteristic portions 2b of 1.3 or more.

Such a color difference $\Delta E$ contributes to further improvement of the design properties.

The color difference $\Delta E$ is more preferably 1.5 or more, still more preferably 1.8 or more, particularly preferably 2.0 or more.

The color difference $\Delta E$ is preferably 70 or less, more preferably 60 or less in terms of representation of a wood-grain design.

As used herein, the color difference $\Delta E$ is measured and calculated as described below.

$L^*$, $a^*$, and $b^*$ values in the $L^*a^*b^*$ colorimetric system are measured in the characteristic portions 2a and the non-characteristic portions 2b of the decorative sheet 10 using a spectrophotometer (SE 6000 available from Nippon Denshoku Industries Co., Ltd.) based on the total reflection light (specular reflection light + diffused reflection light) under irradiation with light (illuminant D65) to the surface on the side with the transparent resin layer 3 (in the case of including a surface protective layer 4, the side with the surface protective layer) of the decorative sheet 10 at an incident angle of 10 degrees (direction normal to the surface on the transparent resin layer 3 side = 0 degrees).

Here, the $L^*$, $a^*$, and $b^*$ values in the characteristic portions 2a are denoted as $L_1^*$, $a_1^*$, and $b_1^*$, respectively. The $L^*$, $a^*$, and $b^*$ values in the non-characteristic portions 2b are denoted as $L_2^*$, $a_2^*$, and $b_2^*$, respectively.

The "$L^*a^*b^*$ colorimetric system" refers to the colorimetric system standardized by International Commission on Illumination (CIE) and employed in JIS Z8781-4: 2013. In the $L^*a^*b^*$ colorimetric system, the lightness is expressed by $L^*$, and the chromaticity indicating the color tone and chrominance is expressed by $a^*$ and $b^*$.

The values obtained by the measurement are substituted into the following equation for calculation of the color difference.

Color difference $\Delta E = ( (L_1^* - L_2^*)^2 + (a_1^* - a_2^*)^2 + (b_1^* - b_2^*)^2)^{1/2}$

The picture layer 2 may have any thickness. The thickness is preferably 0.1 um or greater, more preferably 0.5 um or greater and 600 um or smaller. Having a thickness within the range indicated above, the picture layer 2 can impart an excellent design to the decorative sheet 10 and also can have hiding properties.

The picture layer 2 can be formed by, for example, gravure printing, offset printing, screen printing, flexo printing, electrostatic printing, or ink-jet printing. In the case of forming a hiding layer, various coating methods may be employed such as roll coating, knife coating, air knife coating, die coating, lip coating, comma coating, kiss coating, flow coating, or dip coating.

(Transparent resin layer)

The decorative sheet 10 includes the transparent resin layer 3.

The transparent resin layer 3 is preferably a layer formed of a thermoplastic resin.

The transparent resin layer 3 may be any layer through which the picture layer 2 is visible, and may be colorless and transparent, colored transparent, or semitransparent.

Examples of the thermoplastic resin include: olefin resins such as polyethylene, polypropylene, polybutene, polymethylpentene, and olefin-based thermoplastic elastomers; polyester resins such as polyethylene terephthalate, polybutylene terephthalate, polyethylene naphthalate, ethylene glycol-terephthalic acid-isophthalic acid copolymer resins, terephthalic acid-ethylene glycol-1,4-cyclohexane dimethanol copolymer resins, and polyester-based thermoplastic elastomers; acrylic resins such as polymethyl(meth)acrylate, methyl(meth)acrylate-butyl(meth)acrylate copolymer resins, and methyl(meth)acrylate-styrene copolymer resins; polycarbonate resins; polyvinyl chloride; polystyrene; and ionomers.

In particular, polyethylene or polypropylene is more preferred as it has high tensile strength and is excellent in chemical resistance to be advantageous in the production process.

The term "(meth)acrylate" as used herein refers to acrylate or methacrylate.

The polyethylene may be an ethylene homopolymer or a copolymer of ethylene and a different comonomer copolymerizable with ethylene (e.g., an $\alpha$-olefin such as propylene, 1-butene, 1-hexene, or 1-octene, vinyl acetate, and vinyl alcohol).

Examples of a polyethylene resin include high density polyethylene (HDPE), medium density polyethylene (MDPE), low density polyethylene (LDPE), linear low-density polyethylene (LLDPE), very low-density polyethylene (VLDPE), ultra-high molecular weight polyethylene (UHMWPE), and crosslinked polyethylene (PEX).

Each of these polyethylenes may be used alone or in combination of two or more.

The polypropylene may be a propylene homopolymer or a copolymer of propylene and a different comonomer copolymerizable with propylene (e.g., an $\alpha$-olefin such as ethylene, 1-butene, 1-hexene, or 1-octene, vinyl acetate, and vinyl alcohol).

Each of these polypropylenes may be used alone or in combination of two or more.

In the present invention, particularly preferred is a propylene homopolymer (homopolypropylene) in order to achieve excellent abrasion resistance and excellent bendability.

The transparent resin layer 3 may consist of a single layer or include multiple layers.

The transparent resin layer 3 preferably has a thickness of 75 um or greater and 110 um or smaller. Including the transparent resin layer 3 having a thickness within such a range, the decorative sheet 10 of the present invention has excellent abrasion resistance and excellent bendability. The transparent resin layer 3 more preferably has a thickness of 95 um or greater and 105 um or smaller.

In the case where the transparent resin layer 3 includes multiple layers, the total thickness of the transparent resin layer 3 needs to be within the above range.

In the case where the transparent resin layer 3 includes multiple layers, the types of the resins forming the multiple layers may be the same or different, and the thicknesses of the multiple layers may be the same or different.

Two or more transparent resin layers 3 may be laminated by any common method. Examples of the method include dry lamination and extrusion thermal lamination.

The transparent resin layer 3 may be subjected to surface treatment such as saponification treatment, glow discharge treatment, corona discharge treatment, plasma discharge treatment, ultraviolet (UV) treatment, or flame treatment, within a range of the gist of the present invention.

(Surface protective layer)

The decorative sheet 10 preferably includes a surface protective layer on the side opposite to the side facing the picture layer 2 of the transparent resin layer 3.

The surface protective layer 4 may have depressions as in FIG. 1(a) or may have no depressions as in FIG. 1(b).

The surface protective layer 4 is a layer for imparting durability (scratch resistance, contamination resistance, weather resistance, etc.) to the decorative sheet 10. The presence of the surface protective layer 4 enables more suitable protection of the picture layer 2, suitably preventing impairment of the design properties due to damage to the decorative sheet 10 itself.

The surface protective layer 4 may consist of a single layer or include multiple layers formed of the same or different material(s). The following materials may be appropriately mixed to form the surface protective layer 4.

The surface protective layer 4 is not limited. Examples thereof include those formed of a crosslink-cured product of a two-component curable resin or ionizing radiation-curable resin composition.

The crosslink-cured product is preferably transparent, and may be semitransparent or colored as long as the layer is transparent enough to allow visual recognition of the picture layer 2.

The two-component curable resin may be any resin that is cured by addition of a curing agent to a base resin. A two-component curable urethane resin with an isocyanate curing agent as the curing agent is preferred.

The ionizing radiation-curable resin is preferably, for example, an oligomer (including what we call a prepolymer and a macromonomer) having a radical polymerizable unsaturated bond or a cationic polymerizable functional group in the molecule and/or a monomer having a radical polymerizable unsaturated bond or a cationic polymerizable functional group in the molecule. The term "ionizing radiation" herein refers to an electromagnetic wave or charged particle having energy capable of polymerizing or crosslinking molecules. The ionizing radiation is typically an electron beam (EB) or ultraviolet light (UV).

Examples of the oligomer or monomer include compounds having a radical polymerizable unsaturated group (e.g., a (meth)acryloyl group, a (meth)acryloyloxy group) or a cationic polymerizable functional group (e.g., an epoxy group) in the molecule. Each of these oligomers or monomers may be used alone, or two or more thereof may be used in admixture. The term "(meth)acryloyl group" as used herein refers to an acryloyl group or a methacryloyl group.

The oligomer having a radical polymerizable unsaturated group in the molecule is preferably, for example, an oligomer of urethane (meth)acrylate, polyester (meth)acrylate, epoxy (meth)acrylate, melamine (meth)acrylate, or triazine (meth)acrylate, more preferably a urethane (meth)acrylate oligomer. An oligomer having a molecular weight of about 250 to 100000 is typically used.

The monomer having a radical polymerizable unsaturated group in the molecule is preferably, for example, a polyfunctional monomer, more preferably a polyfunctional (meth)acrylate.

Examples of the polyfunctional (meth)acrylate include diethylene glycol di(meth)acrylate, propylene glycol di(meth)acrylate, bisphenol A ethylene oxide-modified di(meth)acrylate, trimethyrolpropane tri(meth)acrylate, trimethylolpropane ethylene oxide tri(meth)acrylate, dipentaerythritol tetra(meth)acrylate, dipentaerythritol penta(meth)acrylate (pentafunctional (meth)acrylate), and dipentaerythritol hexa(meth)acrylate (hexafunctional (meth)acrylate). The term "polyfunctional monomer" herein refers to a monomer having multiple radical polymerizable unsaturated groups.

The ionizing radiation-curable resin composition preferably further contains an ionizing radiation-curable resin component containing a urethane (meth)acrylate oligomer and a polyfunctional monomer. The ionizing radiation-curable resin component particularly preferably contains a urethane acrylate oligomer and a polyfunctional monomer at a mass ratio (urethane acrylate oligomer/polyfunctional monomer) of 6/4-9/1. Within such a mass ratio range, better abrasion resistance can be achieved.

If needed, a monofunctional monomer may be appropriately used in addition to the ionizing radiation-curable resin component.

Examples of the monofunctional monomer include methyl(meth)acrylate, 2-ethylhexyl(meth)acrylate, and phenoxyethyl(meth)acrylate.

In the case where ultraviolet light is used for crosslinking of the ionizing radiation-curable resin composition, a photopolymerization initiator is preferably added to the ionizing radiation-curable resin composition.

In the case where the ionizing radiation-curable resin composition is a resin composition containing a radical polymerizable unsaturated group, the photopolymerization initiator used may be an acetophenone, a benzophenone, a thioxanthone, a benzoin, a benzoin methyl ether, or a mixture of these.

In the case where the ionizing radiation-curable resin composition is a resin composition containing a cationic polymerizable unsaturated group, the photopolymerization initiator used may be an aromatic diazonium salt, an aromatic sulfonium salt, an aromatic iodonium salt, a metallocene compound, a benzoin sulfonic acid ester, or a mixture of these. The amount of the photopolymerization initiator is about 0.1 to 10 parts by mass per 100 parts by mass of the ionizing radiation-curable resin component.

The ionizing radiation-curable resin composition may further contain additives, if needed. Examples of the additives include thermoplastic resins (e.g., urethane resins, polyvinyl acetal resins, polyester resins, polyolefin resins, styrene resins, polyamide resins, polycarbonate resins, acetal resins, vinyl chloride-vinyl acetate copolymer resins, vinyl acetate resins, acrylic resins, cellulosic resins), lubricants (e.g., silicone resins, wax, fluororesins), ultraviolet absorbers (e.g., benzotriazole, benzophenone, triazine), light stabilizers (e.g., hindered amine radical scavengers), and colorants (e.g., dyes, pigments).

The electron beam source for the ionizing radiation used may be, for example, an electron beam accelerator of any type (Cockcroft-Walton type, Van de Graaff type, resonant transformer type, insulating core transformer type, linear type, Dynamitron type, radio frequency type) capable of delivering electrons having an energy of 70-1000 keV. The ionizing radiation dose is preferably, for example, about 1-10 Mrad.

The UV source for the ionizing radiation used may be, for example, a light source such as an ultra-high pressure mercury lamp, a high-pressure mercury lamp, a low-pressure mercury lamp, a carbon-arc lamp, a black light, or a metal halide lamp. The ultraviolet light used typically has a wavelength within a range of 190-380 nm.

The thickness of the surface protective layer 4 in the decorative sheet 10 of the present invention is preferably 12 um or greater and 35 um or smaller, more preferably 25 um or greater and 35 um or smaller. When the surface protective layer 4 has a thickness of smaller than 12 $\mu$m, sufficient durability (e.g., scratch resistance, contamination resistance, weather resistance) may not be imparted. When the surface protective layer 4 has a thickness of greater than 35 $\mu$m, it may have a lower transmittance, resulting in lower visibility of the picture of the picture layer.

The lower limit of the thickness of the surface protective layer 4 is still more preferably 28 um and the upper limit thereof is still more preferably 33 $\mu$m.

The surface protective layer 4 may consist of a single layer or include multiple layers. In the case where the surface protective layer 4 includes multiple layers, the materials forming the multiple layers may be the same or different. The total thickness of the multiple layers is preferably 12 um or greater and 35 um or smaller.

In order to impart excellent scratch resistance, the surface protective layer 4 preferably contains inorganic particles such as silica fine particles. Known silica fine particles may be used. The average particle size thereof is preferably not larger than the film thickness of a layer of the surface protective layer 4 in which the silica fine particles are contained.

(Other layers)

The decorative sheet 10 may include other layers such as a primer layer, an adhesive layer, or a backer layer, if needed.

The primer layer can be formed by applying a known primer agent. Examples of the primer agent include a urethane resin-based primer agent containing an acrylic-modified urethane resin (acrylic urethane resin) and the like, a primer agent containing a urethane-cellulosic resin (e.g., resin obtained by adding hexamethylene diisocyanate to a mixture of urethane and cellulose nitrate), and a resin-based primer agent containing an acrylic-urethane block copolymer. The primer agent may contain additives, if needed. Examples of the additives include fillers such as calcium carbonate and clay, flame retardants such as magnesium hydroxide, antioxidants, lubricants, blowing agents, ultraviolet absorbers, and light stabilizers. The amounts of the additives can be appropriately determined in accordance with the product characteristics.

The primer layer may contain an ultraviolet absorber, if needed.

The ultraviolet absorber used may be a known ultraviolet absorber selected as appropriate.

The primer layer may have any thickness. The thickness is preferably 0.01-10 um, more preferably 0.1-1 $\mu$m.

The adhesive layer is not limited, and a known adhesive may be used. Examples of the adhesive include polyurethanes, acrylic resins, polyolefins, polyvinyl acetate, polyvinyl chloride, vinyl chloride-vinyl acetate copolymers, ethylene-acrylic acid copolymers, and ionomers, as well as butadiene-acrylonitrile rubber, neoprene rubber, and natural rubber. Each of these adhesives may be used alone or in combination of two or more.

The adhesive layer has a thickness after drying of preferably about 0.1-30 um, more preferably about 1-5 $\mu$m.

The decorative sheet 10 may include a backer layer as a lowermost layer of the substrate sheet 1 (on the side opposite to the side on which the picture layer 2 is laminated) in order to achieve scratch resistance and impact resistance.

The backer layer used may be a known backer layer selected appropriately, such as one disclosed in JP 2014-188941 A.

For example, a synthetic resin backer layer is provided on the back surface of the substrate sheet 1 (when a different layer is provided on the backmost surface of the decorative sheet 10, the back surface of the different layer). The synthetic resin backer layer formed can impart excellent caster resistance to the decorative sheet.

Non-limiting examples of the resin component constituting the synthetic resin backer layer include thermoplastic resins such as olefin-based resins including polyethylene (PE) (including low-density polyethylene, linear low-density polyethylene, medium-density polyethylene, and high-density polyethylene), polypropylene (PP) (including homopolypropylene), ethylene-vinyl acetate copolymers (EVA), ethylene-vinyl alcohol copolymers, polymethylene, and polymethylpentene; polyvinyl alcohol; polyethylene terephthalate (PET); amorphous polyethylene terephthalate (A-PET); polyalkylene terephthalate with high heat resistance (e.g., "PET-G" (tradename, Eastman chemical company) which is polyethylene terephthalate in which ethylene glycol is partly substituted with, for example, 1,4-cyclohexane dimethanol or diethylene glycol); polybutylene terephthalate (PBT); polycarbonate; polyarylate; polyethyene naphthalate; polyethylene naphthalate-isophthalate copolymers; polyimides; polystyrene; polyamides; and acrylonitrole-butadiene styrene copolymers (ABS). Each of these resins may be used alone or in combination of two or more. Olefin-based resins are preferred among the resin components constituting the synthetic resin backer layer.

(Depressions ($D_1$) and ($D_2$))

The transparent resin layer 3 of the decorative sheet of the present invention has depressions ($D_1$) harmonizing with the characteristic portions 2a of the picture layer 2 on a side opposite to a side facing the picture layer 2, as shown in the decorative sheet 10 illustrated in FIG. 1.
The picture layer 2 preferably has depressions ($D_2$) positioned in the lamination direction of the depressions ($D_1$) on a side opposite to a side facing the substrate sheet 1.

The depressions ($D_1$) have shapes harmonizing with the characteristic portions 2a of the picture layer 2.

The shapes of the depressions ($D_1$) may be the shapes of the outlines of the characteristic portions 2a of the pattern in the picture layer 2, simplified shapes of the outlines of the characteristic portions 2a of the pattern in the picture layer 2, or similar shapes in which the outlines of the characteristic portions 2a are reduced or enlarged.

The depressions ($D_1$) are positioned so as to harmonize with the characteristic portions 2a of the picture layer 2.

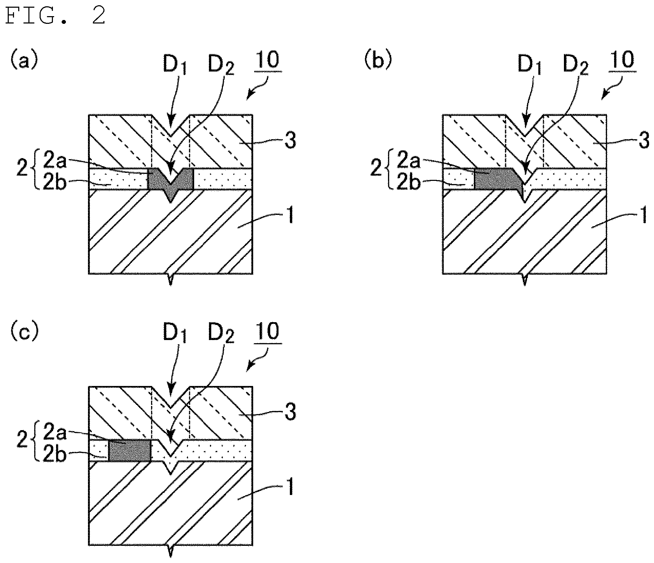

FIGs. 2(a) to 2(c) each illustrate a cross-sectional view schematically showing an example of the decorative sheet of the present invention.

The positional relation between each depression ($D_1$) and the corresponding characteristic portion 2a of the picture layer 2 may be any of the relations shown in FIGs 2(a) to 2(c).

Specifically, the characteristic portion 2a of the picture layer 2 and the depression ($D_1$) may be positioned so as to entirely overlap with each other in the lamination direction as illustrated in FIG. 2(a). Alternatively, the characteristic portion 2a of the picture layer 2 and the depression ($D_1$) may be positioned so as to partly overlap with each other in the lamination direction as illustrated in FIG. 2(b). Further alternatively, the characteristic portion 2a of the picture layer 2 and the depression ($D_1$) may be positioned so as not to overlap with each other as illustrated in FIG. 2(c).

It is to be noted that, even in the positional relation as shown in FIG. 2(c), the depression ($D_1$) is positioned in the vicinity of the characteristic portion 2a of the picture layer 2 in a plan view. The term "vicinity" means that the distance between the position of the characteristic portion 2a and the position of the depression ($D_1$) having a shape corresponding to the characteristic portion 2a in a plan view is 3 mm or shorter.

These can be determined as appropriate according to the design of the picture layer 2.

The harmonious relation between the depressions ($D_1$) and the characteristic portions 2a does not necessarily have to be established all over the design. Areas where the harmonious relation is not established may be partly present as long as the design properties are not impaired as a whole.

A description is later given on the width of the depression ($D_1$).

The depressions ($D_2$) are positioned in the lamination direction of the depressions ($D_1$).

As illustrated in FIGs. 2(a) to 2(c), each depression ($D_2$) is positioned so as to overlap with the corresponding depression ($D_1$) in the lamination direction.

The depression ($D_2$) may be formed in the characteristic portion 2a of the picture layer 2 as illustrated in FIG. 2(a). Alternatively, the depression ($D_2$) may be formed extending from the characteristic portion 2a to the non-characteristic portion 2b of the picture layer 2 as illustrated in FIG. 2(b). Further alternatively, the depression ($D_2$) may be formed not in the characteristic portion 2a of the picture layer 2 as illustrated in FIG. 2(c) (the depression ($D_2$) is formed in the non-characteristic portion 2b).

In the decorative sheet 10, the depressions ($D_1$) preferably have a depth H greater than the depth h of the depressions ($D_2$).

Owing to the presence of such depressions ($D_1$) and ($D_2$), the decorative sheet 10 can exhibit significantly excellent design properties where a picture pattern of a picture layer harmonizes with depressions to give a 3D visual effect.

The relation between the depth H of the depressions ($D_1$) and the depth h of the depressions ($D_2$) is established for the depressions ($D_1$) and ($D_2$) positioned in the lamination direction of these depressions (overlapping with each other in a plan view).

In order to suitably impart a 3D effect, the ratio (h/H) of the depth h of the depressions ($D_2$) to the depth H of the depressions ($D_1$) in the decorative sheet 10 is preferably 0.25 or higher and 0.60 or lower, more preferably 0.26 or higher and 0.55 or lower, still more preferably 0.28 or higher and 0.50 or lower, particularly preferably 0.30 or higher and 0.48 or lower.

The depth H of the depressions ($D_1$) should be able to suitably impart a 3D effect. For example, the depth H is preferably 50 um or more and 200 um or less, more preferably 55 um or more and 190 um or less.

The depth h of the depressions ($D_2$) is preferably 13 um or more and 100 um or less, more preferably 17 um or more and 92 um or less, for example.

The numerical ranges of the depth H and depth h do not necessarily have to be achieved by all the depressions ($D_1$) and depressions ($D_2$). The depressions ($D_1$) and ($D_2$) not satisfying the numerical ranges may be present as long as the design properties are not impaired as a whole.

For example, provided that the design properties are not impaired as a whole, some of the depressions ($D_1$) and ($D_2$) harmonizing with each other may not satisfy the relation of depth H > depth h.

However, in order to suitably impart design properties, the proportion of the depressions ($D_1$) and ($D_2$) not satisfying the relation of depth H > depth h is preferably lower than 30% of all the depressions ($D_1$) and ($D_2$) positioned in the lamination direction of these depressions observed in an arbitral 10 cm $\times$ 10 cm area in a plan view of the decorative sheet 10. Such observation can be performed using an electron microscope and its measurement conditions described later.

The width W of the depressions ($D_1$) is preferably 400 um or more and 2000 um or less, more preferably 500 um or more and 1500 um or less, for example, though it depends on the picture pattern formed in the picture layer 2.

The width w of the depressions ($D_2$) is preferably 5 um or more and 400 um or less, more preferably 10 um or more and 100 um or less, for example.

The decorative sheet 10 preferably has depressions ($D_3$) on the side facing the picture layer 2 of the substrate sheet 1 and depressions ($D_4$) on the side opposite to the side facing the picture layer 2 of the substrate sheet 1, where the depressions ($D_3$) and the depressions ($D_4$) are positioned in the lamination direction of the depressions ($D_1$) and the depressions ($D_2$).

In this case, the depth of the depressions is preferably decreased in the order of the depressions ($D_1$), the depressions ($D_2$), the depressions ($D_3$), and the depressions ($D_4$).

In the case where the decorative sheet 10 includes the surface protective layer 4 and has depressions ($D_5$) positioned in the lamination direction of the depressions ($D_1$) and the depressions ($D_2$) on a side opposite to a side facing the transparent resin layer 3 of the surface protective layer 4, the depth of the depressions is preferably decreased in the order of the depressions ($D_5$), the depressions ($D_1$), the depressions ($D_2$), the depressions ($D_3$), and the depressions ($D_4$).

Owing to the presence of such depressions ($D_1$-$D_5$), the decorative sheet 10 can suitably exhibit design properties where a picture pattern of a picture layer harmonizes with depressions.

Such depressions ($D_1$-$D_5$) can be suitably formed by the method for producing a decorative sheet of the present invention described later.

The relation of the depths of the depressions ($D_1$-$D_5$) is established for the depressions ($D_1$-$D_5$) positioned in the lamination direction of these depressions (overlapping with each other in a plan view).

A description is given on how to measure the width W and depth H of the depressions ($D_1$) and the width w and depth h of the depressions ($D_2$).

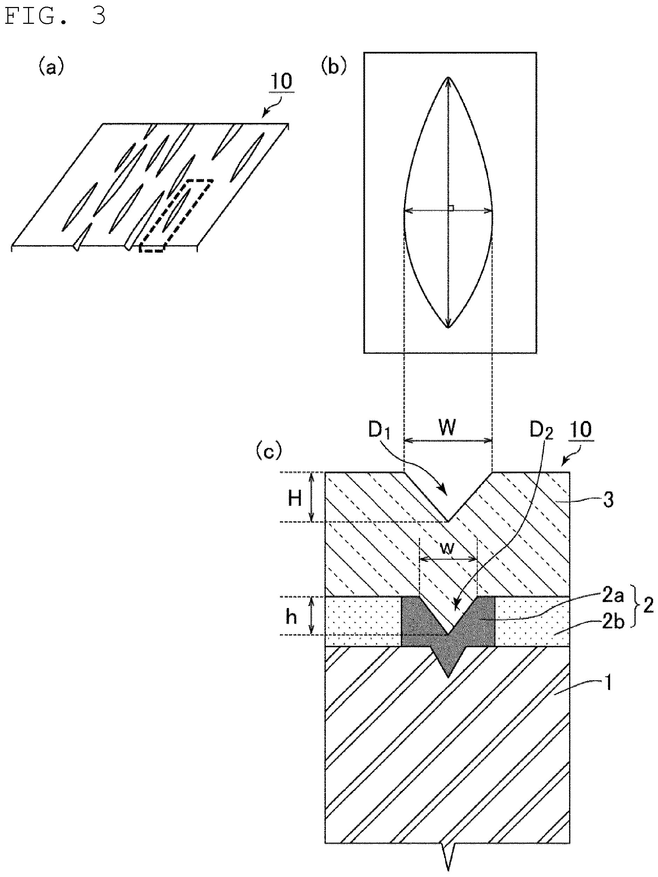

FIG. 3(a) illustrates a perspective view schematically showing an example of the decorative sheet of the present invention. FIG. 3(b) illustrates a top view schematically showing an example of the decorative sheet of the present invention. FIG. 3(c) illustrates a cross-sectional view schematically showing an example of the decorative sheet of the present invention.

As illustrated in FIG. 3(a), one depression formed on the surface of the decorative sheet 10 is selected. As illustrated in FIG. 3(b), the major axis and the minor axis of the selected depression are determined. Then, as illustrated in FIG. 3(c), the decorative sheet is cut along the minor axis and the obtained cross section is observed using an electron microscope to measure the widths (W and w) and depths (H and h) of the depressions ($D_1$) and ($D_2$) .

As illustrated in FIG. 3(c), the depth H of the depression ($D_1$) means the vertical distance from the surface of the transparent resin layer 3 to the deepest point of the depression ($D_1$). The depth h of the depression ($D_2$) means the vertical distance from the surface of the picture layer 2 to the deepest point of the depression ($D_2$).

The major axis of the depression refers to the longest line connecting two points on the periphery of the depression. The minor axis of the depression refers to the longest line connecting two points on the periphery of the depression in the direction perpendicular to the major axis.

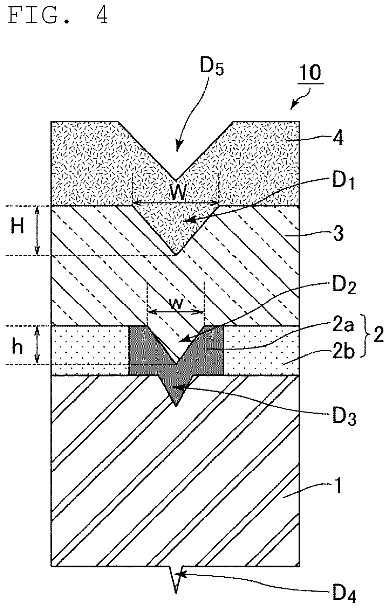

In contrast, as illustrated in FIG. 4, since the decorative sheet 10 includes, on one side of the substrate sheet 1, at least the picture layer 2, the transparent resin layer 3, and the surface protective layer 4 in the stated order, the width W of the depression ($D_1$) is smaller than the minor axis of the depression formed on the surface of the decorative sheet 10. In this case, a cross section obtained by cutting the decorative sheet 10 along the minor axis of the depression may be observed using an electron microscope for the measurement.

Even when the surface protective layer 4 is provided as illustrated in FIG. 1(b), the width W of the depression ($D_1$) can be determined by electron microscopy through the surface protective layer 4.

The width W and depth H of the depressions ($D_1$) and the width w and depth h of the depressions ($D_2$) are each an average of 10 values obtained by the measurement performed on arbitrarily selected 10 depressions formed on the surface of the decorative sheet 10 by the above method.

The conditions for the measurement using an electron microscope are use of a laser scanning confocal microscope (measurement head "VK-X1050", stand "VK-D1", and controller "VK-X1000" (available from KEYENCE CORPORATION)) and observation at 300x magnification, for example.

Examples of the resin coating composition usable for forming a colored surface protective layer include an organic solvent-based coating composition with excellent quick-drying properties and an aqueous coating composition which is friendly to the natural and working environment, each containing a urethane resin, an acrylic urethane resin, an epoxy resin, a polyester resin, or the like. In particular, preferred is an aqueous coating composition with a urethane resin blended therein.

Examples of the usable colorant include those mentioned for the picture layer.

The method described in JP 4569720 B may be employed as a coloring method using the resin coating composition.

<Method for producing decorative sheet>

The method for producing a decorative sheet of the present invention, for example, having a configuration illustrated in FIG. 1(a) includes: a lamination step of laminating at least, on one side of a substrate sheet, a picture layer including a characteristic portion and a non-characteristic portion, a transparent resin layer, and a surface protective layer in the stated order to provide a laminate; and a formation step of embossing the laminate from a side opposite to a side facing the picture layer of the surface protective layer to form a depression ($D_1$) harmonizing with the characteristic portion of the picture layer on the side opposite to a side facing the picture layer of the transparent resin layer.

The formation step may include forming a depression ($D_2$) positioned in the lamination direction of the depression ($D_1$) on a side opposite to a side facing the substrate of the picture layer. The depression ($D_1$) preferably has a depth H greater than the depth h of the depression ($D_2$).

The lamination step includes laminating at least, on one side of a substrate sheet, a picture layer, a transparent resin layer, and a surface protective layer in the stated order to provide a laminate.

The substrate sheet 1, the picture layer 2, the transparent resin layer 3, and the surface protective layer 4 described above may be used in the lamination step. On one side of the substrate sheet 1, at least the picture layer 2, the transparent resin layer 3, and the surface protective layer 4 are laminated in the stated order.

The adhesive layer or the primer layer described above may be provided on one side of each layer or between the layers.

Here, the transparent resin layer and the surface protective layer are each made to have a thickness falling within the above range. Moreover, the modulus of elasticity ($E_{MD}$) in the machine direction, the modulus of elasticity ($E_{CD}$) in the cross direction, and the ratio of these are adjusted within the above ranges by appropriately adjusting the conditions such as the compounding ratio of raw materials of the surface protective layer, conditions for curing treatment, and conditions for aging treatment.

The lamination step more specifically includes, for example, a preparation step of preparing a substrate sheet with a picture layer including a characteristic portion and a non-characteristic portion on one side, a lamination step of laminating a transparent resin layer on the picture layer, and a coating step of coating the transparent resin layer with a surface protective layer. In the preparation step, the lamination step, and the coating step, the methods for forming the picture layer, the transparent resin layer, and the surface protective layer are each as described above.

The formation step includes embossing the laminate from a side opposite to a side facing the picture layer of the surface protective layer to form depressions harmonizing with the characteristic portion of the picture layer.

The method including the formation step can form the depression ($D_1$) harmonizing with the characteristic portion of the picture layer and, following the formation of the depression ($D_1$), the depression ($D_2$) smaller than the depression ($D_1$) at the position in the lamination direction of the depression ($D_1$).

The embossing may be performed, for example, using a known sheet- or rotary embosser. The present invention exerts an effect that the picture pattern of the picture layer stably harmonizes with the depressions. The effect and the stability (variation) of the harmonized design are evaluated based on the premise that the decorative sheet is produced by continuous production in which embossing is performed using a rotary embosser.

As the picture pattern used in the embossing, a design harmonizing with the picture layer 2 may be selected as appropriate.

The embossing may be performed at any temperature, preferably at a temperature that reduces a loss of the depressions, i.e., an embossing return, during molding by thermal press bonding.

In the case of the configuration illustrated in FIG. 1(b), a method may be employed in which the coating step for laminating the surface protective layer is not performed in the lamination step but is performed after embossing is performed on the side opposite to the side facing the picture layer of the transparent resin layer in the formation step.

The decorative sheet produced by the method for producing a decorative sheet of the present invention includes at least, on one side of a substrate, a picture layer, a transparent resin layer, and a surface protective layer in the stated order. The transparent resin layer has a depression ($D_1$) harmonizing with a characteristic portion of the picture layer, and the modulus of elasticity ($E_{MD}$) in the machine direction, the modulus of elasticity ($E_{CD}$) in the cross direction, and the ratio of these are each within a predetermined range. Thus, the decorative sheet of the present invention has significantly excellent design properties where a picture pattern of a picture layer harmonizes with depressions and excellent scratch resistance.

<Decorative panel>

The decorative panel of the present invention includes: an adherent; and the decorative sheet of the present invention on the adherend.

Examples of the adherend include: wooden boards such as wood veneers, plywood, particle boards, and medium-density fiberboards (MDF); gypsum-based boards such as gypsum boards and slag-gypsum boards; cement boards such as calcium silicate boards, asbestos boards, light weight aerated concrete boards, and hollow extruded cement boards; fiber cement boards such as pulp cement boards, asbestos cement boards, and wood chip cement boards; ceramic boards such as pottery boards, porcelain boards, earthenware boards, glass boards, and enameled boards; metal sheets such as iron sheets, galvanized steel sheets, polyvinyl chloride sol-applied steel sheets, aluminum sheets, and copper sheets; thermoplastic resin sheets such as polyolefin resin sheets, polyvinyl chloride resin sheets, acrylic resin sheets, ABS sheets, and polycarbonate sheets; thermosetting resin sheets such as phenolic resin sheets, urea resin sheets, unsaturated polyester resin sheets, polyurethane resin sheets, epoxy resin sheets, and melamine resin sheets; and so-called FRP sheets obtained by impregnating various fibrous substrates (e.g., glass fiber nonwoven fabric, woven fabric, paper) with resin (e.g., phenolic resin, urea resin, unsaturated polyester resin, polyurethane resin, epoxy resin, melamine resin, diallylphthalate resin) and curing the impregnated substrates for complication. Each of these may be used alone or two or more of these may be laminated to be used as a complex substrate.

Thermoplastic resin sheets and thermosetting resin sheets may contain various additives such as coloring materials (pigments or dyes), fillers such as wood flour or calcium carbonate, matting agents such as silica, blowing agents, flame retardants, lubricants such as talc, antistatic agents, antioxidants, ultraviolet absorbers, or light stabilizers, if needed.

The adherend may have any thickness.

The decorative sheet of the present invention may be laminated on the adherend by any method. For example, the decorative sheet of the present invention is laminated on the adherend via the primer layer or adhesive layer described above.

EXAMPLES

In the following, the present invention is more specifically described with reference to, but not limited to, examples.

(Example 1)

A colored polypropylene film having a thickness of 60 um was provided as a substrate sheet. On the back surface of the substrate sheet was formed a back surface primer layer (thickness of 2 $\mu$m) and on the front surface of the substrate sheet was formed a picture layer with a wood-grain pattern to have a thickness of 2 um by gravure printing.

On the picture layer was formed a transparent adhesive layer using a urethane resin to have a thickness of 2 um. On the transparent adhesive layer formed was laminated a transparent polypropylene resin sheet by extrusion lamination to have a thickness of 100 um, whereby a transparent resin layer was formed.

Next, the surface of the transparent resin layer was subjected to corona discharge treatment, on which a primer layer (primer layer for forming a surface protective layer, thickness of 2 $\mu$m) was formed by application of a two-component curable urethane resin.

The surface of the primer layer was multilayer-coated with a urethane acrylate-based electron beam curable resin (EB resin) by gravure coating such that the applied resin after curing had a thickness of 30 um (lower layer: 15 um, upper layer: 15 $\mu$m). The electron beam curable resin was cured by irradiation with electron beams using an electron beam irradiation device under the conditions of an acceleration voltage of 175 KeV and 5 Mrad in an environment of an oxygen concentration of 200 ppm or less, whereby a surface protective layer was formed.

The materials constituting the lower layer and the upper layer are described below.

The electron beam curable resin used for forming the lower layer contained silica fine particles (particle size of 6 um) having a particle size equal to or smaller than the coating film thickness in an amount of 30 parts by mass per 100 parts by mass of the electron beam curable resin. The electron beam curable resin used for forming the upper layer contained silica fine particles (particle size of 12 um) having a particle size equal to or smaller than the coating film thickness in an amount of 10 parts by mass per 100 parts by mass of the electron beam curable resin and silica fine particles (particle size of 20 um) having a particle size equal to or larger than the coating film thickness in an amount of 10 parts by mass per 100 parts by mass of the electron beam curable resin.

The surface protective layer formed as described above was heated with a non-contact infrared heater, whereby the substrate sheet and the transparent resin layer were softened. Immediately thereafter, thermal-pressure embossing was performed to form depressions in a wood-grain pattern on the surface protective layer. Thus, a decorative sheet was produced.

The substrate sheet used in the present example was confirmed to show softer behavior in a high-temperature environment than in an ambient-temperature environment.

(Examples 2-4, Comparative Example 1)

The decorative sheet was produced as in Example 1, except that the thicknesses of the transparent resin layer and the surface protective layer, the modulus of elasticity ($E_{MD}$) in the machine direction, and the modulus of elasticity ($E_{CD}$) in the cross direction were adjusted to the values in Table 1.

In Comparative Example 1, the substrate sheet used was a sheet not subjected to annealing after formation.

(Example 5)

A colored polypropylene film having a thickness of 60 um was provided as a substrate sheet. On the back surface of the substrate sheet was formed a back surface primer layer (thickness of 2 $\mu$m) and on the front surface of the substrate sheet was formed a picture layer with a wood-grain pattern to have a thickness of 2 um by gravure printing.

On the picture layer was formed a transparent adhesive layer using a urethane resin to have a thickness of 2 um. On the transparent adhesive layer formed was laminated a transparent polypropylene resin sheet by extrusion lamination to have a thickness of 100 um, whereby a transparent resin layer was formed.

Next, the surface of the transparent resin layer was subjected to corona discharge treatment, on which a primer layer (primer layer for forming a surface protective layer, thickness of 2 $\mu$m) was formed by application of a two-component curable urethane resin.

The surface of the primer layer was multilayer-coated with a urethane acrylate-based electron beam curable resin (EB resin) by gravure coating such that the applied resin after curing had a thickness of 30 um (lower layer: 15 um, upper layer: 15 $\mu$m). The electron beam curable resin was cured by irradiation with electron beams using an electron beam irradiation device under the conditions of an acceleration voltage of 175 KeV and 5 Mrad in an environment of an oxygen concentration of 200 ppm or less, whereby a surface protective layer was formed.

The materials constituting the lower layer and the upper layer are described below.

The electron beam curable resin used for forming the lower layer contained silica fine particles (particle size of 6 um) having a particle size equal to or smaller than the coating film thickness in an amount of 30 parts by mass per 100 parts by mass of the electron beam curable resin. The electron beam curable resin used for forming the upper layer contained silica fine particles (particle size of 12 um) having a particle size equal to or smaller than the coating film thickness in an amount of 10 parts by mass per 100 parts by mass of the electron beam curable resin and silica fine particles (particle size of 20 um) having a particle size equal to or larger than the coating film thickness in an amount of 10 parts by mass per 100 parts by mass of the electron beam curable resin.

The surface protective layer formed as described above was heated with a non-contact infrared heater, whereby the substrate sheet and the transparent resin layer were softened. Immediately thereafter, thermal-pressure embossing was performed to form depressions in a wood-grain pattern on the surface protective layer. Thus, a decorative sheet was produced.

The substrate sheet used in the present example was confirmed to show softer behavior in a high-temperature environment than in an ambient-temperature environment.

(Examples 6-8, Comparative Example 2)

The decorative sheet was produced as in Example 5, except that the thicknesses of the transparent resin layer and the surface protective layer, the modulus of elasticity ($E_{MD}$) in the machine direction, and the modulus of elasticity ($E_{CD}$) in the cross direction were adjusted to the values in Table 2.

In Comparative Example 2, the substrate sheet used was a sheet crystallization of which had been promoted by additional annealing for 96 hours in an environment of 40°C after formation.

<Design properties>

The top surface of each of the decorative sheets produced in the examples and the comparative examples was visually observed, and whether or not the picture pattern of the picture layer harmonizes with the depressions was sensorily evaluated based on the criteria shown below.

Table 1 shows the evaluation results.

++: They give a harmonized impression with better 3D design properties.
+: They give a harmonized impression.
-: They have a recognizable discrepancy and fail to give a harmonized impression.

<Modulus of elasticity (decorative sheet)>

Dumbbell-shaped test pieces in conformity with JIS K6732 were punched out in the machine direction and in the cross direction from each of the decorative sheets of the examples and comparative examples. The test pieces were subjected to a tensile test (device used: Tensilon universal tensile testing machine RTC-1250 A available from ORIENTEC) under the conditions of a tensile speed of 50 mm/min and the distance between chucks of 80 mm at a temperature of 20°C. Based on the first straight line part of the resulting tensile stress-strain curve, the modulus of elasticity ($E_{MD}$) in the machine direction and the modulus of elasticity ($E_{CD}$) in the cross direction were calculated using the following formula.

$$E = \Delta\rho/\Delta\varepsilon$$

E: modulus of elasticity
$\Delta\rho$: stress difference due to the original average cross-sectional area between two points on the straight line
$\Delta\varepsilon$: strain difference between the same two points

<Modulus of elasticity (substrate sheet)>

Dumbbell-shaped test pieces in conformity with JIS K6732 were punched out in the machine direction from each of the substrate sheets used in the examples and comparative examples. The test pieces were subjected to a tensile test (device used: Tensilon universal tensile testing machine RTC-1250 A available from ORIENTEC) under the conditions of a tensile speed of 50 mm/min and the distance between chucks of 80 mm at a temperature of 40°C. Based on the first straight line part of the resulting tensile stress-strain curve, the modulus of elasticity ($E_{MD-b}$) in the machine direction was calculated using the following formula.

$$E = \Delta\rho/\Delta\varepsilon$$

E: modulus of elasticity
$\Delta\rho$: stress difference due to the original average cross-sectional area between two points on the straight line
$\Delta\varepsilon$: strain difference between the same two points

<Scratch resistance>

The decorative sheets produced in the examples and the comparative examples were each laminated on a MDF substrate, and subjected to the JAS flooring abrasion A test for evaluation of scratch resistance.
The test (1200 rotations) was performed using a taber abrasion tester with S-42 sandpaper under the conditions of a load of 1000 g (500-g load from single wheel $\times$ 2, including a load from the rubber disc) for evaluation based on the following criteria.

+: At least 50% of the area of the picture layer remained in the tested portion.
-: Only less than 50% of the area of the picture layer remained in the tested portion.

<Stability of harmonized design: variation>

The top surfaces of 1000 sheets of each of the decorative sheets produced in the examples and the comparative examples were visually observed, and the amount of the discrepancy in the machine direction between the picture pattern of the picture layer and the depressions on the transparent resin layer was measured using a measuring tape, and the standard normal distribution for misregistration was calculated. The variation was evaluated based on the value of the standard deviation $\pm3\sigma$ with the following details. "$\pm3\sigma$" is the range in which the measured data exist with a probability of 99.7% for 100% of the total area of the histogram of the normal distribution of standard deviations.

Table 1 shows the evaluation results.

+: the standard deviation $\pm 3\sigma$ of less than 3 mm
-: the standard deviation $\pm 3\sigma$ of 3 mm or more

[Table 1]

| | Transparent resin layer Thickness ($\mu$m) | Surface protective layer Thickness ($\mu$m) | $E_{MD}$ (MPa) | $E_{CD}$ (MPa) | $E_{MD}/E_{CD}$ | $E_{MD-b}$ (MPa) | Design properties | Scratch resistance | Stability of harmonized design |
|---|---|---|---|---|---|---|---|---|---|
| Example 1 | 100 | 30 | 986 | 868 | 1.13 | 408 | ++ | + | + |
| Example 2 | 100 | 30 | 933 | 795 | 1.17 | 408 | ++ | + | + |
| Example 3 | 100 | 30 | 896 | 795 | 1.12 | 408 | ++ | + | + |
| Example 4 | 100 | 30 | 820 | 750 | 1.09 | 408 | + | + | + |
| Comparative Example 1 | 100 | 30 | 913 | 798 | 1.14 | 348 | + | + | - |

As shown in Table 1, when the transparent resin layer has the depressions ($D_1$) harmonizing with the characteristic portions of the picture layer, and the substrate sheet has a modulus of elasticity $E_{MD-b}$ in the machine direction within a specific range in an environment of 40°C, the decorative sheet has excellent design properties where the wood-grain pattern of the picture layer harmonizes with the depressions, excellent scratch resistance, and excellent stability of the harmonized design. In contrast, the decorative sheet of Comparative Example 1 in which the substrate sheet had a small modulus of elasticity in the machine direction had poor stability of the harmonized design, though it had excellent design properties and excellent scratch resistance.

[Table 2]

| | Transparent resin layer Thickness ($\mu$m) | Surface protective layer Thickness ($\mu$m) | $E_{MD}$ (MPa) | $E_{CD}$ (MPa) | $E_{MD}/E_{CD}$ | TMA (%/ 120°C) | Design properties | Scratch resistance | Stability of harmonized design |
|---|---|---|---|---|---|---|---|---|---|
| Example 5 | 100 | 30 | 986 | 868 | 1.13 | 7.2 | ++ | + | + |
| Example 6 | 100 | 30 | 933 | 795 | 1.17 | 7.4 | ++ | + | + |
| Example 7 | 100 | 30 | 896 | 795 | 1.12 | 7.2 | ++ | + | + |
| Example 8 | 100 | 30 | 820 | 750 | 1.09 | 7.5 | + | + | + |
| Comparative Example 2 | 100 | 30 | 979 | 883 | 1.10 | 4.2 | + | + | - |

As shown in Table 2, when the transparent resin layer has the depressions ($D_1$) harmonizing with the characteristic portions of the picture layer, and the transparent resin layer and the surface protective layer each have a thickness within a predetermined range, the decorative sheet has excellent design properties where the wood-grain pattern of the picture layer harmonizes with the depressions, excellent scratch resistance, and excellent stability of the harmonized design. In contrast, the decorative sheet of Comparative Example 2 in which the substrate sheet had low thermomechanical properties had poor stability of the harmonized design, though it had excellent design properties and excellent scratch resistance.

INDUSTRIAL APPLICABILITY

The decorative sheet of the present invention has excellent design properties where a picture pattern of a picture layer stably harmonizes with depressions and excellent scratch resistance, and therefore is significantly useful as a decorative sheet included in a decorative panel or the like.

REFERENCE SIGNS LIST

1 substrate sheet
2 picture layer
2a characteristic portion
2b non-characteristic portion
3 transparent resin layer
4 surface protective layer
10 decorative sheet

**Claims**

1. A decorative sheet comprising:

    a substrate sheet;
    a picture layer;
    a transparent resin layer; and
    a surface protective layer, the decorative sheet comprising at least the picture layer, the transparent resin layer, and the surface protective layer in a stated order on one side of the substrate sheet,
    the picture layer having a wood-grain pattern including a characteristic portion and a non-characteristic portion,
    the transparent resin layer having a depression ($D_1$) harmonizing with the characteristic portion of the picture layer on a side opposite to a side facing the picture layer,
    the substrate sheet containing a non-halogen thermoplastic resin and showing softer behavior in a high-temperature environment than in an ambient-temperature environment.

2. The decorative sheet according to claim 1,
    wherein the substrate sheet has a modulus of elasticity in a machine direction of 350 MPa or higher and 600 MPa or lower in an environment of 40°C.

3. The decorative sheet according to claim 1 or 2,
    wherein the decorative sheet has an elongation rate in a machine direction of 6% or higher and 10% or lower at a loading rate of 50 mN/min in an environment of 120°C, relative to a length in an environment of 20°C, in thermomechanical analysis.

4. The decorative sheet according to any one of claims 1 to 3,

    wherein a modulus of elasticity ($E_{MD}$) in a machine direction and a modulus of elasticity ($E_{CD}$) in a cross direction of the decorative sheet are both 750 MPa or higher and 1100 MPa or lower in an environment of 20°C, and
    the modulus of elasticity ($E_{MD}$) in the machine direction and the modulus of elasticity ($E_{CD}$) in the cross direction give a ratio ($E_{MD}/E_{CD}$) of 1.00 or higher and 1.20 or lower.

**5.** The decorative sheet according to any one of claims 1 to 4,
wherein the characteristic portion of the picture layer includes at least one pattern selected from the group consisting of a vessel, a knot, an annual ring, and a mottle of a wood grain, and the picture layer has a color difference $\Delta E$ between the characteristic portion and the non-characteristic portion of 1.3 or more.

**6.** The decorative sheet according to any one of claims 1 to 5,
wherein the substrate sheet is a colored polyolefin film having a thickness of 50 um or greater and 70 um or smaller.

**7.** The decorative sheet according to any one of claims 1 to 6,
wherein the transparent resin layer has a thickness of 75 um or greater and 110 um or smaller, and the surface protective layer has a thickness of 12 um or greater and 35 um or smaller.

**8.** A decorative panel comprising:

an adherend; and
the decorative sheet according to any one of claims 1 to 7 on the adherend.

EP 4 378 683 A1

FIG. 1

(a)

D₁      D₂    10

4
3
2a } 2
2b
1

(b)

D₁      D₂    10

4
3
2a } 2
2b
1

22

FIG. 2

(a)

(b)

(c)

FIG. 3

(a)

(b)

(c)

FIG. 4

<div align="center">**INTERNATIONAL SEARCH REPORT**</div>

| International application No. |
| --- |
| **PCT/JP2021/036153** |

**A. CLASSIFICATION OF SUBJECT MATTER**

*B32B 27/00*(2006.01)i; *B29C 59/02*(2006.01)i
FI: B29C59/02; B32B27/00 E

According to International Patent Classification (IPC) or to both national classification and IPC

**B. FIELDS SEARCHED**

Minimum documentation searched (classification system followed by classification symbols)

B32B27/00; B29C59/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2016-64629 A (DAINIPPON PRINTING CO., LTD.) 28 April 2016 (2016-04-28) paragraphs [0038], [0081], [0132]-[0136], tables 1, 2, fig. 1 | 1-8 |
| Y | JP 2008-143017 A (TOPPAN COSMO, INC.) 26 June 2008 (2008-06-26) paragraph [0034] | 1-8 |
| Y | JP 10-217407 A (DAINIPPON PRINTING CO., LTD.) 18 August 1998 (1998-08-18) claim 1 | 1-8 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 October 2021** | **26 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/036153**

| Patent document cited in search report | | | Publication date (day/month/year) | Patent family member(s) | | | Publication date (day/month/year) |
|---|---|---|---|---|---|---|---|
| JP | 2016-64629 | A | 28 April 2016 | WO | 2015/105168 | A1 | |
| | | | | paragraphs [0045], [0111], [0187]-[0192], tables 1-9, fig. 1 | | | |
| | | | | EP | 3098071 | A1 | |
| | | | | EP | 3446873 | A1 | |
| | | | | KR | 10-2016-0107252 | A | |
| | | | | CN | 105899362 | A | |
| | | | | CN | 108284654 | A | |
| | | | | KR | 10-2018-0091112 | A | |
| JP | 2008-143017 | A | 26 June 2008 | (Family: none) | | | |
| JP | 10-217407 | A | 18 August 1998 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016221871 A
- JP 2014188941 A
- JP 4569720 B